# EUROPEAN PATENT APPLICATION

(11) **EP 2 738 053 A2**
(43) Date of publication of application: **04.06.2014**
(21) Application number: 13193471.3
(22) Date of filing: 19.11.2013
(51) Int. Cl.: B60S 1/24, F16C 11/06

(54) **Double ball stud assembly and wiper system comprising the same**

(30) Priority: 30.11.2012 CN 201210505446
(71) Applicant: Bosch Automotive Products (Changsha) Co., Ltd, Changsha Hunan 410100 (CN)
(72) Inventor: Zimmer, Joachim, 410100 Changsha Hunan (CN); Chen, Jinsong, 410100 Changsha Hunan (CN); Qi, You, 410100 Changsha Hunan (CN); Chen, Sheng, 410100 Changsha Hunan (CN)
(74) Representative: Barth, Stephan Manuel

(57) **Abstract**

The invention provides a double ball stud assembly (100)used in a vehicle wiper system, the double ball stud assembly (100) comprising a first member (10) made of a metal material and a second member (50) made of a plastic material, the first member (10) comprising a first connecting portion (25) and a second connecting portion (35), the second connecting portion (35) extending through a hole (80) which is formed in the second member (50) in an axial direction, and at least one of a first ball stud portion (15) and a second ball stud portion (55) being provided by the second member (50), wherein the first ball stud portion (15) is configured to be connected with a first connecting rod (22) of the wiper system, the second ball stud portion (55) is configured to be connected with a second connecting rod (26) of the wiper system, the first connecting portion (25) is configured to be connected with a crank (90) of the wiper system, and the first ball stud portion (15) and the second ball stud portion (55) are provided adjacent to or spaced from each other in the axial direction and are assembled together by the first connecting portion (25).

## Description

### Technical Field

The present invention relates to a double ball stud assembly and a wiper system for a vehicle comprising the double ball stud assembly.

### Background Art

A wiper system for a vehicle generally comprises a driving assembly referred to as a wiper motor assembly, a link assembly connected with the driving assembly, and two wiper arm assemblies driven by the driving assembly via the link assembly, that is a driver side wiper arm assembly and a passenger side wiper arm assembly. The wiper arm assembly supports a wiper blade which is configured for swinging reciprocatingly on a windshield.

The link assembly comprises a driver side connecting rod connected with the driver side wiper arm assembly and a passenger side connecting rod connected with the passenger side wiper arm assembly, and the driving assembly comprises a crank as an output member.

In a wiper system where the driving assembly is located between the driver side wiper arm assembly and the passenger side wiper arm assembly, the crank of the driving assembly is connected with the driver side connecting rod and the passenger side connecting rod of the link assembly via a double ball stud assembly to drive the two connecting rods.

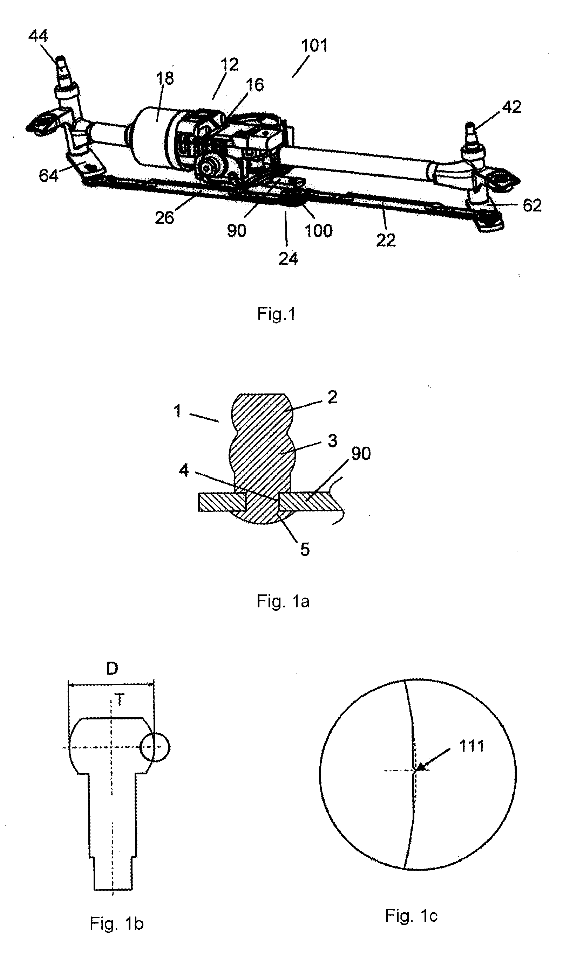

A double ball stud assembly according to prior art is shown in Fig. 1a, in which the double ball stud assembly 1 is an integral part, and comprises two ball stud portion 2 and 3 respectively engaged with the driver side connecting rod and the passenger side connecting rod and an coupling portion 4 connected with the crank 90 of the driving assembly. The double ball stud assembly 1 further comprises a dome portion 5 formed by riveting the double ball stud assembly 1 to the crank 90.

According to the prior art, a single ball stud is manufactured by forging, for example, a cold heading process, and a tool split line may be formed at a position of the ball stud with a maximum diameter D, which is denoted by a reference number 111 in Fig.s 1b and 1c. The double ball stud assembly is produced by machining, resulting in high manufacture costs. A wiper system may comprise one or two double ball stud assemblies, which further increases cost of the wiper system.

There is a demand to provide a double ball stud assembly with reduced costs and thus to further reduce the cost of a wiper system comprising the double ball stud assembly.

### Summary of the Invention

An object of the invention is to provide a double ball stud assembly with a reduced cost by modifying its structure to reduce the cost of a wiper system comprising the double ball stud assembly.

To this end, in an aspect of the invention, a double ball stud assembly used in a vehicle wiper system is provided, which comprises a first member made of a metal material and a second member made of a plastic material, the first member comprising a first connecting portion and a second connecting portion, the second connecting portion extending through a hole which is formed in the second member in an axial direction, and at least one of a first ball stud portion and a second ball stud portion being provided by the second member, wherein the first ball stud portion is configured to be connected with a first connecting rod of the wiper system, the second ball stud portion is configured to be connected with a second connecting rod of the wiper system, the first connecting portion is configured to be connected with a crank of the wiper system, and the first ball stud portion and the second ball stud portion are provided adjacent to or spaced from each other in the axial direction and are assembled together by the first connecting portion.

According to a preferred embodiment, the second connecting portion of the first member has a shape selected from: circular, elliptical, polygonal or combination thereof.

According to a preferred embodiment, the second connecting portion of the first member is provided at its outer circumferential surface with one of the following features: protruding ribs, texture, and knurling.

According to a preferred embodiment, the first member and the crank comprise a first pair of mating surfaces perpendicular to the axial direction, and/or the second member and the crank comprise a second pair of mating surfaces perpendicular to the axial direction.

According to a preferred embodiment, the first pair of mating surfaces and/or the second pair of mating surfaces comprise a first mating feature for preventing the two surfaces of the respective pair of mating surfaces from rotating relative to each other.

According to a preferred embodiment, the first mating feature comprises one or more recesses formed on one surface of the respective pair of mating surfaces and one or more protrudings formed on the other surface of the respective pair of mating surfaces for cooperating with the one or more recesses.

According to a preferred embodiment, the second ball stud portion is located between the first connecting portion and the first ball stud portion, or the first ball stud portion is located between the first connecting portion and the second ball stud portion.

According to a preferred embodiment, the first member is connected fixdly with the crank by one of the following: thread connecting, fastening by a nut, riveting, crimping, welding or speet nut connecting.

According to a preferred embodiment, the first connecting portion of the first member has a cross sectional shape selected from: circular, elliptical, polygonal or combination thereof.

According to a preferred embodiment, the first member and the second member comprise a third pair of mating surfaces perpendicular to the axial direction.

According to a preferred embodiment, the third pair of mating surfaces comprise a second mating feature for preventing the two surfaces of the third pair of mating surfaces from rotating relative to each other, and for example, the second mating feature comprises one or more recesses formed on one surface of the third pair of mating surfaces and one or more protrudings formed on the other surface of the third pair of mating surfaces for cooperating with the one or more recesses.

According to a preferred embodiment, the first connecting portion is located between the second ball stud portion and the first ball stud portion.

According to a preferred embodiment, the first member comprises a positioning feature for locating the first member on a member made of a plastic member where the first ball stud portion or the second ball stud portion is situated.

According to a preferred embodiment, one of the first ball stud portion and the second ball stud portion is provided by the second member made of the plastic material and the other of the first ball stud portion and the second ball stud portion is formed by a portion of the first member, or the first ball stud portion and the second ball stud portion are respectively provided by the second member made of the plastic material and a third member made of a plastic material.

According to a preferred embodiment, both the first ball stud portion and the second ball stud portion are provided by the second member.

According to a preferred embodiment, the second member is over molded or adhered or press fit onto the first member.

In a second aspect of the invention, a double ball stud assembly used in a vehicle wiper system is provided, which comprises a first member and a second member which are made of a plastic material, the first member comprising a first ball stud portion and a first connecting portion, the second member comprising a second ball stud portion, and the first ball stud portion, the second ball stud portion and the first connecting portion being assembled together next to each other, wherein the first ball stud portion is configured to be connected with a first connecting rod of the wiper system, the second ball stud portion is configured to be connected with a second connecting rod of the wiper system, and the first connecting portion is configured to be connected with a crank of the wiper system.

According to a preferred embodiment, the first member and the second member are connected together by a first fixing structure.

According to a preferred embodiment, the double ball stud assembly further comprises a third member made of a metal material, the first member and the second member are formed with a first inner hole and a second inner hole which are configured for receiving the third member, and the first inner hole and the second inner hole respectively define an enclosed space for accommodating the third member.

According to a preferred embodiment, the third member being fixed on the first member and/or the second member by a second fixing structure.

According to a preferred embodiment, the first fixing structure and/or the second fixing structure comprises the same or different form-fit structures, and in particular, the first fixing structure and/or the second fixing structure comprises a hooking structure.

In a third aspect of the invention, a wiper system for a vehicle is provided, which comprises a driving assembly comprising a crank which is configured for outputting a rotational movement, a link assembly connected with the driving assembly, the link assembly comprising a first connecting rod at a driver side and a second connecting rod at a passenger side, and a wiper assembly driven by the driving assembly via the link assembly to swing reciprocatingly, wherein the wiper system comprises the double ball stud assembly described above, the first ball stud portion of the double ball stud assembly being accommodated in a first ball socket provided in the first connecting rod, the second ball stud portion of the double ball stud assembly being accommodated in a second ball socket provided in the second connecting rod, and the first connecting portion of the double ball stud assembly being accommodated in a hole provided in the crank of the driving assembly.

A double ball stud assembly according to the invention is formed by combinating a metal insert and a plastic member, wherein the metal insert can be manufactured by forging, for example, by a cold heading process, or by machining, and the plastic member can be manufactured by injection molding. Complex machining is avoided for the double ball stud assembly thus formed, and then the cost is substantially reduced.

### Brief Description of the Drawings

The above and other features and advantages of the invention will be better understood from the description of preferred embodiments of the invention in conjunction with the drawings, in which:
Fig. 1 is a perspective view of a wiper system for a vehicle;
Fig. 1a is an illustrative view of a double ball stud assembly of the wiper system according to prior art;
Fig. 1b is a view illustrating a single ball metal insert manufactured by forging according to prior art, and Fig. 1c is an enlarged view of a portion of Fig. 1b;
Fig. 2 is a longitudinal cross sectional view of a double ball stud assembly according to a first preferred embodiment of the invention, and Fig. 2a is a view of a first member of the double ball stud assembly according to this embodiment;
Fig. 3 shows an assembled view and an exploded view of the first member and a second member of the double ball stud assembly according to the first preferred embodiment;
Fig.s 4a-4d show examplary shapes that a cross section A may have;
Fig.s 5a-5c are illustrative views of connection manners between the double ball stud assembly according to the first embodiment of the invention and a crank;
Fig.s 6a-6c show examplary shapes that a cross section B may have;
Fig.s 7a-7c show features on a transition surface of the first member of the double ball stud assembly according to the first embodiment of the invention which is to be mated with the crank;
Fig.s 8a-8b show features on a surface of the crank which is to be mated with the double ball stud assembly;
Fig.s 9a-9c show features on an end surface of the second member of the double ball stud assembly according to the first embodiment of the invention which is to be mated with the crank;

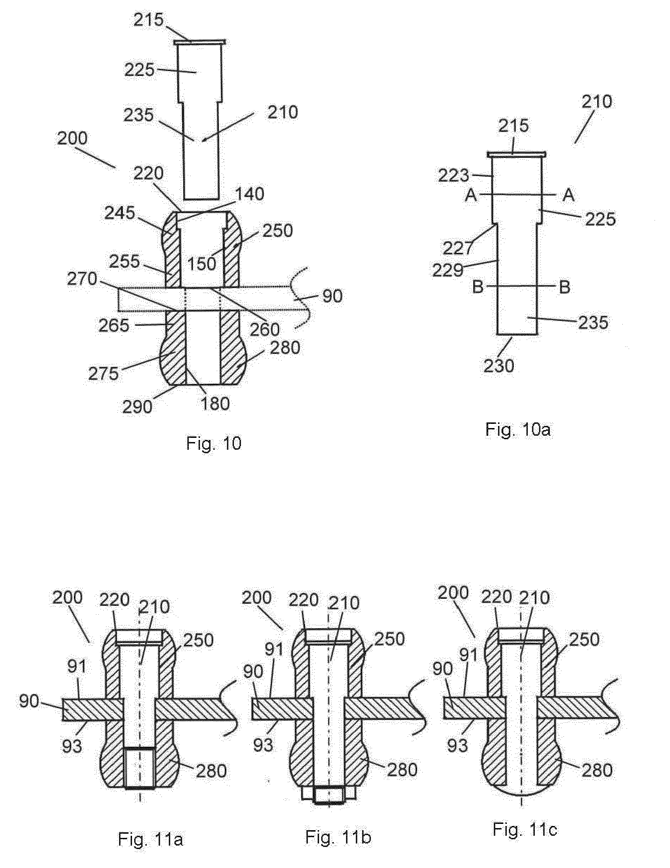

Fig. 10 shows a double ball stud assembly according to a second embodiment of the invention, and Fig. 10a only shows its first member;
Fig.s 11a-11c show connection manners between the double ball stud assembly according to the second embodiment of the invention and the crank;

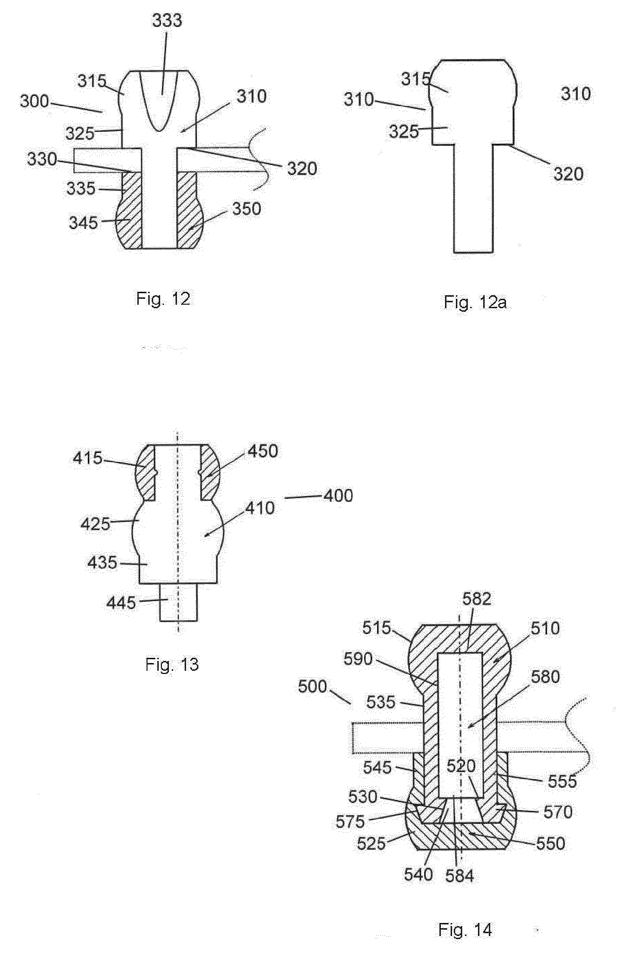

Fig. 12 shows a double ball stud assembly according to a third embodiment of the invention embodiment, and Fig. 12a only shows its first member;
Fig. 13 shows a double ball stud assembly according to a fourth embodiment of the invention embodiment;
Fig. 14 shows a double ball stud assembly according to a fifth embodiment of the invention;

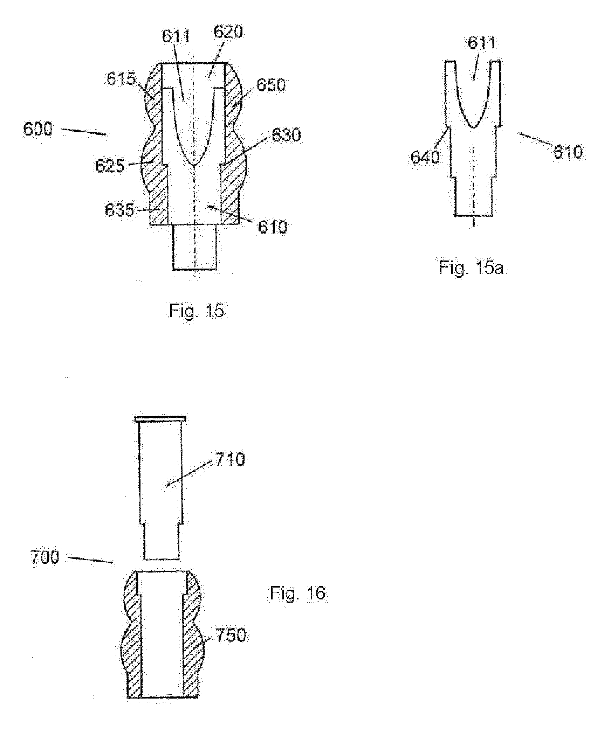

Fig. 15 shows a double ball stud assembly according to a sixth embodiment of the invention, and Fig. 15a only shows its first member;
Fig. 16 shows a double ball stud assembly according to a seventh embodiment of the invention;
Fig.s 17a and 17b show connection manners between the double ball stud assembly according to a variant of the seventh embodiment of the invention and the crank; and
Fig.s 18a and 18b show features on a surface of a metal member which is to be mated with a plastic member of a double ball stud assembly according to the invention.

### Detailed Description of Preferred Embodiments

In the drawings, functionally or structurally identical or similar elements or devices, unless otherwise stated, are given the same reference numerals.

A wiper system according to the invention is equipped to a vehicle to remove dirt, defoliation, airborne road debris, precipitations and the like from a windshield and to keep a driver's vision clear.

Fig. 1 shows a wiper system 101 for a front or rear windshield of a vehicle.

The wiper system 101 of the vehicle generally comprises a driving assembly 12 for supplying power for the wiper system 101. The driving assembly 12 comprises a motor 18 and a reducer mechanism 16. The motor 18 may be a Permanent Magnetic DC motor, and the reducer mechanism 16 may be a conventional reducer mechanism well known in the art. The motor 18 and the reducer mechanism 16 are fixed to a body of the vehicle by means of a motor housing and a gear housing respectively. In Fig. 1, the driving assembly 12 of the wiper system 101 is arranged between a drive side and a passenger side. The driving assembly 12 further comprises a crank 90 for outputting rotational movement and finally driving a wiper blade of the wiper system 101 to swing reciprocatingly.

A link assembly 24 which is connected to the driving assembly 12 comprises a driver side connecting rod 22 and a passenger side connecting rod 26. Both the driver side connecting rod 22 and the passenger side connecting rod 26 of the wiper system 101 are connected with the crank 90 of the driving assembly 12 arranged therebetween.

The link assembly 24 of the wiper system 101 for the vehicle further comprises a driver side pivot plate 62 and a passenger side pivot plate 64, and a driver side pivot shaft 42 and a passenger side pivot shaft 44, the pivot shafts 42 and 44 supporting a driver side wiper arm assembly and a passenger side wiper arm assembly (not shown) respectively. Upon switching on the motor 18, rotational movement of the motor 18 is transferred to the link assembly 24 via the reducer mechanism. When the link assembly 24 actuates the pivot plates 62 and 64, the pivot shafts 42 and 44 drive wiper blades of the corresponding wiper arm assemblies to swing reciprocatingly on the windshield of the vehicle.

In the wiper system 101 of Fig. 1, the crank 90 is connected with the driver side connecting rod 22 and the passenger side connecting rod 26 via a double ball stud assembly. The double ball stud assembly according to the invention will be described in detail hereinafter, in which a direction in which a rotational axis T of the double ball stud assembly extends is defined as an axial direction.

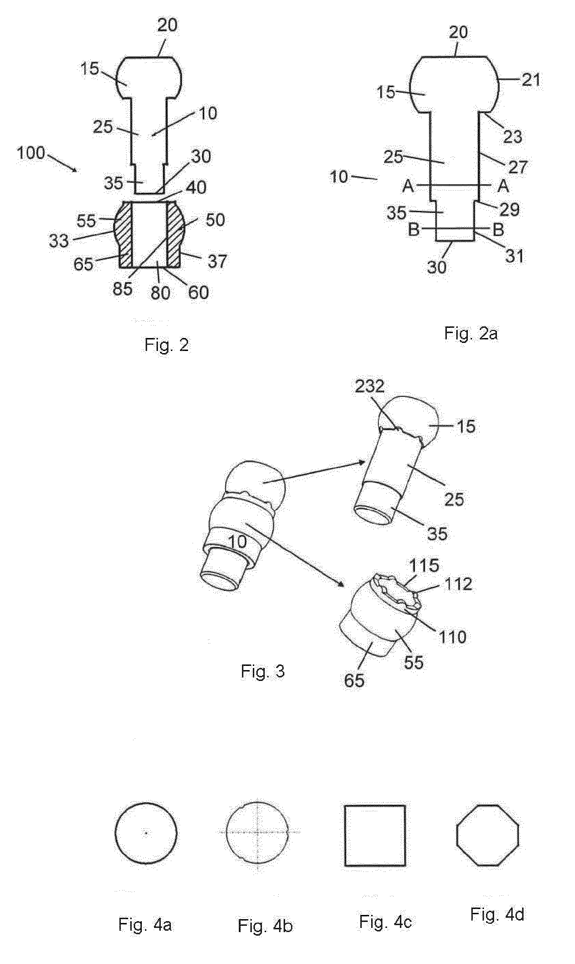

Fig. 2 schematically shows a double ball stud assembly 100 according to a first preferred embodiment of the invention, wherein the double ball stud assembly 100 comprises a first member 10 and a second member 50. The first member 10 may be in the form of an insert made of a metal material, and the second member 50 may be made of a plastic material. Only the first member 10 is shown in Fig. 2.

The first member 10 comprises a first ball stud portion 15, a first elongated portion 25 and a second elongated portion 35 which are connected to each other in order. The first ball stud portion 15 is configured to be received in a ball socket formed in the driver side connecting rod 22 (called a first connecting rod hereinafter), the first elongated portion 25 is configured to be engaged in a central hole 80 of the second member 50, and the second elongated portion 35 is configured to be engaged in a hole formed in the crank 90 of the driving assembly.

The first member 10 comprises a planar upper end surface 20 as an upper end surface of the first ball stud portion 15, a spherical surface 21 as an outer circumferential surface of the first ball stud portion 15, a mating end surface 23 of the first ball stud portion 15 which is to be mated with the second member 50, an outer circumferential surface 27 of the first elongated portion 25, a transition end surface 29 between the first elongated portion 25 and the second elongated portion 35, an outer circumferential surface 31 of the second elongated portion 35, and an end surface of the second elongated portion 35 which is a planar lower end surface 30 of the first member 10.

The second member 50 comprises a second ball stud portion 55 and a separation portion 65. The second ball stud portion 55 is configured to be received in a ball socket formed in the passenger side connecting rod 26 (called a second connecting rod hereinafter), and the separation portion 65 is configured for separating the passenger side connecting rod 26 and the crank 90 in the axial direction when the crank 90 is assembled (see Fig.s 5a-5c).

The second member 50 comprises a planar upper end surface 40 which is an upper end surface of the second ball stud portion 55, a spherical surface 33 of the second ball stud portion 55 as its outer circumferential surface, an outer circumferential surface 37 of the separation portion 65, and an end surface of the separation portion 65 which is a lower end surface 60 of the second member 50.

As described above, the second member 50 is provided with the central hole 80, and comprises an inner circumferential surface 85 defining the central hole 80.

The double ball stud assembly 100 is formed by assembling the first member 10 and the second member 50 together. The assembling comprises inserting the second member 50 over the first member 10 with the inner circumferential surface 85 of the second member 50 cooperating with the outer circumferential surface 27 of the first member 10 and the upper end surface 40 of the second member 50 cooperating with the mating end surface 23 of the first member 10. The second member 50 is prevented from rotating relative to the first member 10.

If the inner circumferential surface 85 of the second member 50 and the outer circumferential surface 27 of the first member 10 are both cylindrical (see Fig. 4a), an object of preventing the second member 50 and the first member 10 from rotating relative to each other may be achieved by roughing the mating surfaces, for example, notching, knurling, for example, net knurling, the outer circumferential surface 27 of the first member 10 (see Fig.s 18a and 18b).

Providing form-fit features on the cylindrical inner circumferential surface 85 of the second member 50 and the cylindrical outer circumferential surface 27 of the first member 10 is also possible. As shown in Fig. 4b, the outer circumferential surface 27 of the first member 10 is provided with longitudinal grooves, and the inner circumferential surface 85 of the second member 50 is provided with ribs for cooperating with the grooves, the ribs and the grooves have corresponding shapes and sizes. Of course, the ribs may be provided on the outer circumferential surface 27, and the grooves may be provided in the inner circumferential surface 85.

Alternatively, if the inner circumferential surface 85 of the second member 50 and the outer circumferential surface 27 of the first member 10 which are mated with each other are both cylindrical, the object of preventing the two members from rotating relative to each other may be achieved by means shown in Fig. 3.

In Fig. 3, the second member 50 further comprises a further segment 110 having an outer diameter equal to or different from the outer diameter of the separation portion 65 of the second member 50. An upper end surface 115 of the further segment 110 of the second member 50 is mated with the mating end surface 23 of the first member.

The further segment 110 is formed with one or more protrudings 112, such as bosses or ribs, which extend out axially from the upper end surface 115 and are separated at regular or irregular intervals. Correspondingly, the mating end surface 23 of the first member 10 is provided with one or more recesses 232 cooperating with the one or more protrudings 112. The protrudings 112 and the recesses 232 have corresponding shapes and sizes, and mating between them prevents the second member 50 and the first member 10 from rotating relative to each other. As is apparent to those skilled in the art, any other mating features on the mating end surface 23 and the upper end surface 115 for the same object can be used.

In order to prevent the second member 50 and the first member 10 from rotating relative to each other, the inner circumferential surface 85 of the second member 50 and the outer circumferential surface 27 of the first member 10 may have other shape besides the cylindrical shape, and for example, a cross section A of the first member 10 may have, but be not limited to, any exemplary shape shown in Fig.s 4c-4d. The exemplary shapes shown in Fig.s 4c-4d may also adopted by the cross section A of a double ball stud assembly of other embodiments described below.

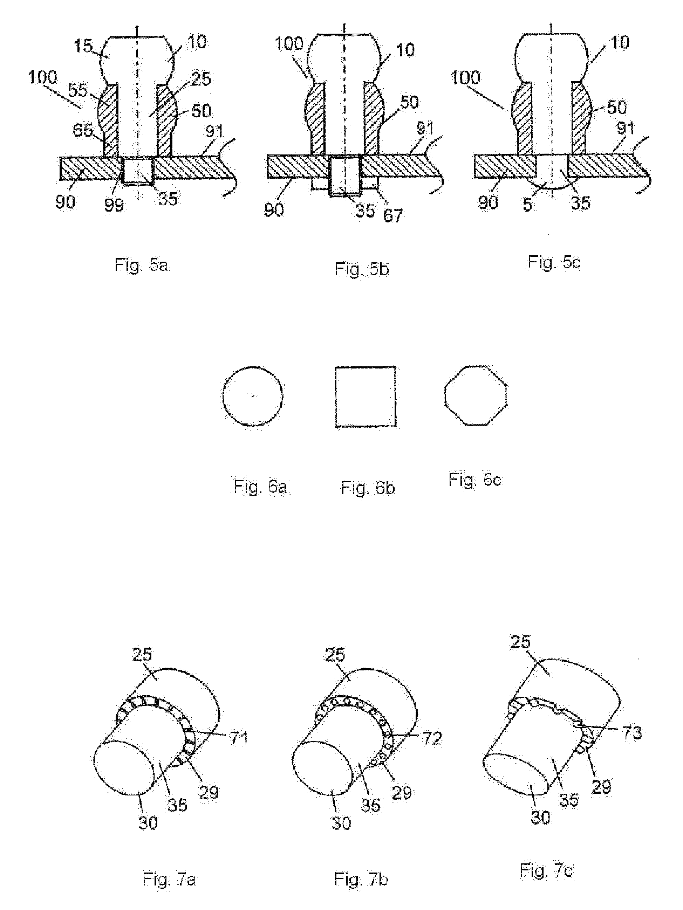

Possible connecting manners between the double ball stud assembly 100 comprising the first member 10 and the second member 50 and the crank 90 of the wiper system 101 are shown are Fig.s 5a-5c. An appropriate connecting manner may include a thread connection as shown in Fig. 5a, a fastening connection by a nut 67 as shown in Fig. 5b, and a riveting connection as shown in Fig. 5c. A dome portion 5 formed by riveting is also shown in Fig. 5c.

In the connecting manner shown in Fig. 5a, a hole 99 formed in the crank 90 for receiving the second elongated portion 35 of the first member 10 should be configured as a threaded hole, and the outer surface 31 of the second elongated portion 35 of the first member 10 should be provided with outer threads for mating with the threaded hole. In the connecting manner shown in Fig. 5b, the hole 99 in the crank 90 can be a through hole or a threaded hole, and the outer surface 31 of the second elongated portion 35 of the first member 10 is provided with outer threads. In the connecting manner shown in Fig. 5c, the hole 99 can be a through hole, and the outer surface 31 of the second elongated portion 35 of the first member 10 may not be provided with threaded features. It is required that the double ball stud assembly 100 of the wiper system 101 be prohibited from rotating relative to the crank 90. Riveting the two components together can effect the above object. Suitable measures should be taken if other connection manners are adopted.

Fig.s 6a-6c show some shapes that a cross section B of the second elongated portion 35 of the first member 10 of the double ball stud assembly 100 may have. If the second elongated portion 35 of the first member 10 is cylindrical, that is, the cross section B has a circular shape as shown in Fig. 6a, the connection manners as shown in Fig.s 5a-5c may be adopted between the double ball stud assembly 100 and the crank 90, that is, the riveting connection, the thread connection or the fastening connection by the nut can be adopted to avoid the relative rotation therebetween. The cross section B of the second elongated portion 35 of the first member 10 may have a square shape as shown in Fig. 6b, an octagonal shape as shown Fig. 6c, or any other polygonal shape to achieve the same object. It should be noted that the hole 99 in the crank 90 for receiving the second elongated portion 35 of the first member 10 should have a cross sectional shape and size corresponding to the second elongated portion 35. The description with reference to the cross section B of the double ball stud assembly is also applicable to other embodiments of double ball stud assemblies described below for the same purpose.

Other methods may be used for the above object. As shown in Fig.s 5a-5c, the transition end surface 29 of the first member 10 of the double ball stud assembly 100 and a surface 91 of the crank 90 are mated with each other. It can be conceived by those skilled in the art that cooperating features can be provided on the transition end surface 29 and the surface 91 which are mated with each other.

As shown in Fig. 7a, the transition end surface 29 between the first elongated portion 25 and the second elongated portion 35 of the first member 10 is provided with strip ribs having a rectangular cross sectional shape. Fig. 7b shows that the transition end surface 29 between the first elongated portion 25 and the second elongated portion 35 of the first member 10 is provided with one or more circular protrudings 72 protruding downwards there-from, and Fig. 7c shows strip ribs 73 having an arc-shaped cross sectional shape.

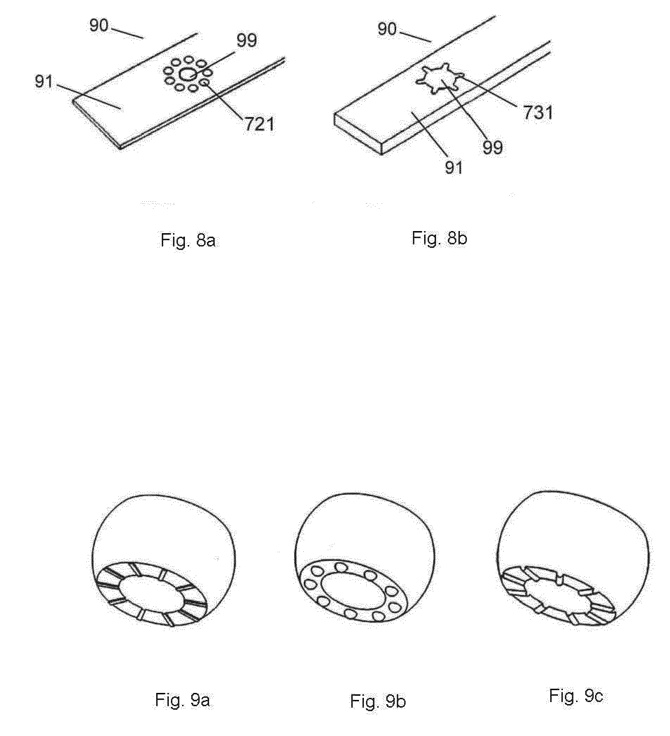

Corresponding to the above features, Fig. 8a shows that the surface 91 of the crank 90 of the wiper system 101 is provided with one or more circular recesses 721 outside the hole 99, the circular protrudings 72 being cooperating with the corresponding circular recesses 721 to prevent the first member 10 and the crank 90 from rotating relative to each other. Fig. 8b shows that the surface 91 of the crank 90 of the wiper system 101 is provided with strip grooves 731 having an arc end and extending out from the hole 99, the strip grooves 731 being cooperating with the strip ribs 73 to prevent the first member 10 and the crank 90 from rotating relative to each other.

Of course, the transition end surface 29 of the first member 10 may comprise a female feature, and the surface 91 of the crank 90 may comprise a male feature to be mated with the female feature. The number, shape and size of the features are not limited to those described above, and instead, any features for the same purpose or combination thereof may be included.

Another solution for preventing the double ball stud assembly 100 and the crank 90 from rotating relative to each other is providing the lower end surface 60 of the second member 50 and the surface 91 of the crank 90 with cooperating features as described above. With this regard, Fig.s 9a-9c show possible features that may be provided on the lower end surface of the second member 50 without the separation portion 65, and the surface 91 of the crank 90 comprises features to be mated with the possible features on the lower end surface of the second member 50 so that the crank 90 can be mated with the second member 50 in a form-fit or friction-fit manner.

The first member 10 of the double ball stud assembly 100 may be manufactured by a conventional forging process, for example, a cold heading process. The first ball stud portion 15 of the first member 10 thus formed may comprise the tool split line 111 at the maximum diameter as shown in Fig.s 1b and 1c. Alternatively, the first member 10 can also be manufactured by machining. The second member 50 of the double ball stud assembly 100 can be formed by injection molding. The first member 10 manufactured by forging is assembled with the second member 50 manufactured by injection molding to form the double ball stud assembly 100, which significantly reduces the related costs compared to the integral double ball stud assembly manufactured by machining as in the prior art..

A double ball stud assembly 200 according to a second preferred embodiment of the invention is shown in an exploded view in Fig. 10, a first member of which is shown in Fig. 10a.

The double ball stud assembly 200 comprises a first member 210, a second member 250 and a third member 280. The first member 210 is configured as a metal insert, and comprises a positioning portion 215, a first elongated portion 225 and a second elongated portion 235 which are connected to each other in order, the second member 250 comprising a first ball stud portion 245 and a first transition portion 255, and the third member 280 comprising a second transition portion 265 and a second ball stud portion 275. The second member 250 is formed with a positioning hole 140 having a first diameter and a central hole 150 having a second diameter and being concentric with the positioning hole 140, and the third member 280 is formed with a central hole 180 having a third diameter, wherein the first diameter is larger than the second diameter, the second diameter is larger than the third diameter, and the third diameter is equal to the diameter of the hole 99 of the crank 90.

Figures 11a-11c show how the double ball stud assembly 200 is assembled with the crank 90. The positioning portion 215 of the first member 210 is accommodated in the positioning hole 140 of the second member 250 in such a way that it does not extend beyond an upper end surface 220 of the second member 250, the first elongated portion 225 of the first member 210 is accommodated in the central hole 150 of the second member 250, and the second elongated portion 235 is accommodated in the hole 99 of the crank 90 and the central hole 180 of the third member 280.

The second member 250 and the third member 280 can be assembled onto the first member 210 in a thread connection, adhesion, or press-fit manner. Fig. 11a shows the thread connection manner, in which an inner circumferential surface of the central hole 180 of the third member 280 is provided with inner threads, and the second elongated portion 235 of the first member 210 is provided with outer threads to be mated with the inner threads. Fig. 11b shows the connection manner by a nut, in which the second elongated portion 235 of the first member 210 is provided with outer threads, and the inner circumferential surface of the central hole 180 of the third member 280 may be or not be provided with inner threads. Fig. 11c shows the riveting connection manner. In addition to the illustrated connection manners, other connection manners, such as snap-fit, welding, crimping, speet nut connecting or the like, can be used to connect the second member 250 and the third member 280 onto the first member 210.

The relative rotation of the second member 250 and the third member 280 relative to the first member 210 should be avoided by the engagement therebetween. To which end, an outer circumferential surface 223 of the first elongated portion 225 of the first member 210 or an outer circumferential surface 229 of the second elongated portion 235 of the first member 210 may have any one of shapes shown in Fig.s 4a-4d. Please refer to the description of the first embodiment for detail. The measures described in first embodiment with reference to Fig. 3 and Fig.s 7a-7c are also applicable to this embodiment, to prevent the first member 210 from rotating relative to the second member 250 and the third member 280.

The crank 90 is located between the second member 250 and the third member 280 and the second elongated portion 235 of the first member 210 passes through the hole 99 formed in the crank 90 after they have been assembled together.

Measures for preventing the first member 210 of the double ball stud assembly 200 according to the second embodiment from rotating relative to the crank 90 are the same as those in the first embodiment. A cross section B of the second elongated portion 235 of the first member 210 may have any one of shapes shown in Fig.s 6b-6c.

The above described object can be achieved by providing mating features on a transition end surface 227 of the first member 210 and the upper surface 91 of the crank 90 which are mated with each other, and/or on a lower end surface 260 of the second member 250 and the upper surface 91 of the crank 90 which are mated with each other, and/or on an upper end surface 270 of the third member 280 and a lower surface 93 of the crank 90 which are mated with each other. Please refer to the description in the first embodiment with reference to Fig.s 7a-7c and Fig.s 8a-8b for details.

Fig. 12 shows a double ball stud assembly 300 according to a third embodiment of the invention. This embodiment differs from the second embodiment in that the double ball stud assembly 300 comprises two components 310 and 350, and Fig. 12a shows the first member 310 without a gauge hole 333.

The first member 310 is configured as an equivalent of a combination of the first member 210 and the second member 250 of the double ball stud assembly 200 of the second embodiment, and comprises a first ball stud portion 315 and a first transition portion 325 respectively corresponding to the first ball stud portion 245 and the first transition portion 255 of the second member 250. The first member 310 is configured in the form of a metal insert.

The second member 350 according to this embodiment is substantially the same as the third member 280 of the second embodiment, and is made of a plastic material by injection molding.

The description with reference to the double ball stud assembly 200 of the second embodiment is also applicable to this embodiment. For example, in order to prevent the relative rotation between the double ball stud assembly 300 and the crank 90, a cross section B of the double ball stud assembly 300 may have any one of shapes shown in Fig.s 6b-6c or any other non-circular shape. Features shown in Fig.s 7a-7c can be provided on a stepped end surface 320 of the first member 310 of the double ball stud assembly 300 and the upper surface 91 of the crank 90 which are mated with each other or on an upper end surface 330 of the second member 350 of the double ball stud assembly 300 and the lower surface 93 of the crank 90 which are mated with each other, and other measures mentioned as above can be taken. The measures taken for preventing the first member 310 and the second member 350 of the double ball stud assembly 300 from rotating relative to each other and described with reference to the above embodiments are applicable as well.

Fig. 13 shows a double ball stud assembly 400 according to a fourth embodiment of the invention. The double ball stud assembly 400 comprises a first member 410 and a second member 450.

The second member 450 is a member made of a plastic material by injection molding, and comprises a first ball stud portion 415 for cooperating with the first connecting rod of the wiper system 101.

The first member 410 is a metal part manufactured by forging, and comprises a second ball stud portion 425 for cooperating with the second connecting rod of the wiper system 101, a transition portion 435 located between the second ball stud portion 425 and the crank 90, and an elongated portion 445 which is configured to be inserted into the hole 99 of the crank 90.

A double ball stud assembly 500 according to a fifth embodiment of the invention will be described with reference to Fig. 14. The double ball stud assembly 500 in this embodiment also comprises three components: a first member 510, a second member 550 and a third member 580.

The first member 510 and the second member 550 are members made of a plastic material by injection molding, and comprise a first ball stud portion 515 for connecting with the first connecting rod of the wiper system 101 and a second ball stud portion 525 for connecting with the second connecting rod of the wiper system 101 respectively.

In addition, the first member 510 further comprises an elongated portion 535 and is formed with an internal cavity 590. Preferably, the internal cavity 590 extends into the first member 510 by a depth at which level a center of sphere of the first ball stud portion 515 is located so that the double ball stud assembly 500 can provide sufficient strength and transfer a torque when it is assembled on the wiper system 101.

Further, the second member 550 further comprises an elongated portion 545 and is formed with an internal cavity 555, the internal cavity 555 having an inner diameter suitable for receiving the elongated portion 535 of the first member 510.

In use, the third member 580 made of a metal material is first inserted into and secured in the internal cavity 590 of the first member 510, and then the second member 550 is assembled so that the elongated portion 535 of the first member 510 is inserted into the internal cavity 555 of the second member 550 and thus is attached to the second member 550. In this way, the three members constitute an integral, i.e., the double ball stud assembly 500.

To this end, the elongated portion 535 of the first member 510 is provided at a lower end with a first mating feature for connecting and securing the third member 580 and a second mating feature for connecting and securing the second member 550.

In this embodiment, the third member 580 is provided in the form of a post having two planar end surfaces 582 and 584, and the elongated portion 535 of the first member 510 is provided at a lower end with a hook portion 520 which bends towards the internal cavity 590, wherein the hook portion 520 comprises an inclined surface 530 defining a taper hole 540. When assembling, the third member 580 is inserted into the taper hole 540 of the first member 510, and the elongated portion 535 of first member 510 is deformed outwards firstly due to the inclined surface 530 to allow the third member 580 to enter the internal cavity 590 and then returns to its original state under its own elasticity. At this point, the hook portion 520 of the first member 510 is hooked on the lower end surface 584 of the third member 580 to fix the third member 580 in the internal cavity 590.

Additionally, the elongated portion 535 of the first member 510 is provided at its lower end with a hook portion 570 bending outwards, the hook portion 570 comprising an inclined surface 575. Correspondingly, provided at a lower end of the internal cavity 555 of the second member 550, that is the closed end, is a portion having a shape complementary to the hook portion 570 of the first member and being configured for accommodating the hook portion 570 of the first member 510 and locking with it when the first member 510 is inserted sufficiently into the second member 550.

For the first and second mating features, other mating features, such as a form-fit feature or a snap fit feature, can be conceived by those skilled in the art.

Fig. 15 shows a double ball stud assembly 600 according to a sixth embodiment of the invention, wherein the double ball stud assembly 600 comprises a first member 610 made of a metal material by forging and a second member 650 made of a plastic material by injection molding.

The second member 650 comprises a first ball stud portion 615 and a second ball stud portion 625 for mounting the first connecting rod and the second connecting rod of the wiper system 101 respectively, and a transition portion 635 for separating the second connecting rod and the crank 90 of the wiper system 101. The second member 650 is formed with an inner hole 620 for accommodating the first member 610. In addition, the inner hole 620 of the second member 650 comprises a positioning step 630 for positioning the first member 610 in the axial direction.

Accordingly, the first member 610 comprises a positioning step 640 for cooperating with the positioning step 630. Fig. 15a also shows a gauge hole 611 of the first member 610.

In this embodiment, the first member 610 can be connected and secured in the second member 650 by over molding, adhering or press fitting.

As a variant, Fig. 16 shows a double ball stud assembly 700 according to a seventh embodiment of the invention. It differs from the double ball stud assembly 600 of the sixth embodiment in that the double ball stud assembly 700 comprises a different axial positioning structure between a first member 710 and a second member 750 of the double ball stud assembly 700.

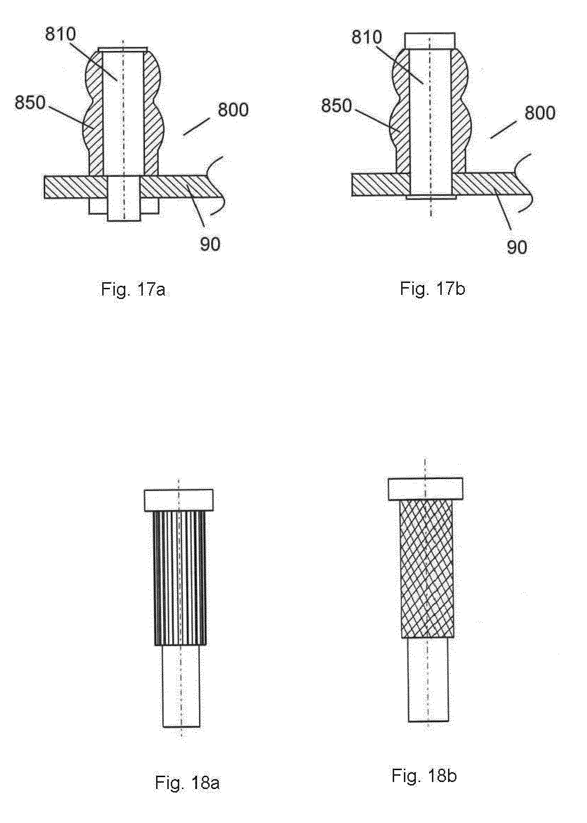

Fig. 17a and Fig. 17b show a double ball stud assembly 800 according to an eighth embodiment of the invention, wherein an axial positioning structure between a first member 810 and a second member 850 of the double ball stud assembly 800 differs from those of the double ball stud assemblies 600 and 700.

Further, the double ball stud assembly 800 can be connected (for example, by nut as shown in the drawings) to the crank 90 of the wiper system 101 at an upper end or at a lower end of the double ball stud assembly 800, as shown in Fig.s 17a and 17b.

Finally with reference to Fig.s 18a and 18b, an outer circumferential surface of a metal insert is provided with protruding ribs (Fig. 18a) or knurling (Fig. 18b), for preventing the metal insert and a plastic member from rotating relative to each other when being assembled together. In addition, all mating surfaces of the first member (the metal insert) and the plastic member of the double ball stud assembly in each embodiment in this description may be provided with the illustrated features for the same purpose.

A double ball stud assembly according to an embodiment of the invention has been described above with reference to the drawings. The double ball stud assembly according to the invention is formed by combinating a metal insert and a plastic member, wherein the metal insert can be manufactured by forging, for example, by a cold heading process, or by machining, and the plastic member can be manufactured by injection molding. Complex machining is avoided for the double ball stud assembly thus formed, and then the cost is substantially reduced.

Several embodiments of the invention have been described above, but the invention is not limited to the embodiments described above and shown in the drawings. Rather, the features included in one embodiment can be included in other embodiments of the invention, and features in different embodiments can be combined into new embodiments. Various substitutions and changes can be made to the structures and forms described herein without departing from the spirit and scope of the invention defined by the claims.

## Claims

1. A double ball stud assembly used in a vehicle wiper system comprising:
a first member made of a metal material and a second member made of a plastic material, the first member comprising a first connecting portion and a second connecting portion, the second connecting portion extending through a hole which is formed in the second member in an axial direction, and at least one of a first ball stud portion and a second ball stud portion being provided by the second member,
wherein the first ball stud portion is configured to be connected with a first connecting rod of the wiper system, the second ball stud portion is configured to be connected with a second connecting rod of the wiper system, the first connecting portion is configured to be connected with a crank of the wiper system, and the first ball stud portion and the second ball stud portion are provided adjacent to or spaced from each other in the axial direction and are assembled together by the first connecting portion.

2. The double ball stud assembly according to claim 1, wherein the second connecting portion of the first member is provided at its outer circumferential surface with one of the following features: protruding ribs, texture, and knurling.

3. The double ball stud assembly according to claim 1 or 2, wherein the first member and the crank comprise a first pair of mating surfaces perpendicular to the axial direction, and/or the second member and the crank comprise a second pair of mating surfaces perpendicular to the axial direction, the first pair of mating surfaces and/or the second pair of mating surfaces comprise a first mating feature for preventing the two surfaces of the respective pair of mating surfaces from rotating relative to each other.

4. The double ball stud assembly according to claim 3, wherein the first mating feature comprises one or more recesses formed on one surface of the respective pair of mating surfaces and one or more protrudings formed on the other surface of the respective pair of mating surfaces for cooperating with the one or more recesses.

5. The double ball stud assembly according to any one of claims 1-4, wherein the second ball stud portion is located between the first connecting portion and the first ball stud portion, or the first ball stud portion is located between the first connecting portion and the second ball stud portion.

6. The double ball stud assembly according to claim 5, wherein the first member and the second member comprise a third pair of mating surfaces perpendicular to the axial direction, and the third pair of mating surfaces comprise a second mating feature for preventing the two surfaces of the third pair of mating surfaces from rotating relative to each other, for example, the second mating feature comprises one or more recesses formed on one surface of the third pair of mating surfaces and one or more protrudings formed on the other surface of the third pair of mating surfaces for cooperating with the one or more recesses.

7. The double ball stud assembly according to any one of claims 1-4, wherein the first connecting portion is located between the second ball stud portion and the first ball stud portion.

8. The double ball stud assembly according to any one of claims 1-7, wherein the first member comprises a positioning feature for locating the first member on a corresponding plastic member by which the first ball stud portion or the second ball stud portion is provided.

9. The double ball stud assembly according to any one of claims 1-8, wherein one of the first ball stud portion and the second ball stud portion is provided by the second member made of the plastic material and the other of the first ball stud portion and the second ball stud portion is formed by a portion of the first member, or the first ball stud portion and the second ball stud portion are provided respectively by the second member made of the plastic material and a third member made of a plastic material.

10. The double ball stud assembly according to any one of claims 1-9, wherein both the first ball stud portion and the second ball stud portion are provided by the second member.

11. A double ball stud assembly used in a vehicle wiper system comprising:
a first member and a second member which are made of a plastic material, the first member comprising a first ball stud portion and a first connecting portion, the second member comprising a second ball stud portion, and the first ball stud portion, the second ball stud portion and the first connecting portion being assembled together next to each other,
wherein the first ball stud portion is configured to be connected with a first connecting rod of the wiper system, the second ball stud portion is configured to be connected with a second connecting rod of the wiper system, and the first connecting portion is configured to be connected with a crank of the wiper system.

12. The double ball stud assembly according to claim 11, wherein the first member and the second member are connected together by a first fixing structure.

13. The double ball stud assembly according to claim 11 or 12, wherein the double ball stud assembly further comprises a third member made of a metal material, the first member and the second member are formed with a first inner hole and a second inner hole respectively which are configured for receiving the third member, and the first inner hole and the second inner hole define an enclosed space for accommodating the third member, the third member being fixed on the first member and/or the second member by a second fixing structure.

14. The double ball stud assembly according to claim 13, wherein the first fixing structure and/or the second fixing structure comprises the same or different form-fit structures, and in particular, the first fixing structure and/or the second fixing structure comprises a hooking structure.

15. A vehicle wiper system comprising:
a driving assembly including a crank which is configured for outputting rotational movement;
a link assembly connected with the driving assembly, the link assembly including a first connecting rod at a driver side and a second connecting rod at a passenger side; and
a wiper assembly driven by the driving assembly via the link assembly to swing reciprocatingly,
wherein the wiper system comprises a double ball stud assembly according to any one of claims 1-14, the first ball stud portion of the double ball stud assembly being accommodated in a first ball socket provided in the first connecting rod, the second ball stud portion of the double ball stud assembly being accommodated in a second ball socket provided in the second connecting rod, and the first connecting portion of the double ball stud assembly being accommodated in a hole provided in the crank of the driving assembly.
